# EUROPEAN PATENT APPLICATION

(11) **EP 4 394 589 A1**
(43) Date of publication of application: **03.07.2024**
(21) Application number: 23195428.0
(22) Date of filing: 05.09.2023
(51) Int. Cl.: G06F 9/30

(54) **RESTRICTING VECTOR LENGTH IN A PROCESSOR**

(30) Priority: 29.12.2022 US 202218091318
(71) Applicant: Intel Corporation, Santa Clara, CA 95054 (US)
(72) Inventor: SANJEEPAN, Vivekananthan, Portland, OR 97229 (US); NEIGER, Gilbert, Portland, OR 97212 (US); ESPIG, Michael, Newberg, OR 97132 (US)
(74) Representative: Samson & Partner Patentanwälte mbB

(57) **Abstract**

Techniques to restrict vector length in a processor are described. A method of an aspect that may be performed by a processor includes executing first instances of vector instructions having respective opcode values regardless of whether they specify wider vectors of a wider vector width or narrower vectors of a narrower vector width, when a control value is a first value. The method also includes executing second instances of vector instructions having the respective opcode values when they specify narrower vectors of the narrower vector width, but do not specify wider vectors of the wider vector width, when the control value is a second different value. The method also includes preventing execution of third instances of vector instructions having the respective opcode values when they specify wider vectors of the wider vector width, when the control value is the second value. Other methods, processors, and systems are disclosed.

## Description

### BACKGROUND

### Technical Field

Embodiments described herein generally relate to processors. In particular, embodiments described herein generally relate to processors to perform single-instruction, multiple-data (SIMD) instructions.

### Background Information

Processors commonly have Single Instruction, Multiple Data (SIMD) architectures. In SIMD architectures, a vector instruction (sometimes referred to as a SIMD instruction or a packed data instruction) may cause the processor to operate on multiple data elements, or multiple pairs of data elements, simultaneously and/or in parallel. The data elements may be packed or otherwise stored within a vector register (sometimes referred to as a SIMD register or a packed data register) as a vector (sometimes referred to as packed data or a SIMD operand). The number of data elements in the vector may be equal to the number of bits of the vector divided by the number of bits of a single data element. Examples of common widths of the vector include, but are not limited to, 64-bits, 128-bits, 256-bits, 512-bits, and 1024-bits. Examples of common widths of the data elements include, but are not limited to, 8-bits, 16-bits, 32-bits, and 64-bits. By way of example, the bits of a 512-bit vector in a 512-bit vector register may be logically divided into a sequence of eight 64-bit data elements, sixteen 32-bit data elements, thirty-two 16-bit data elements, or sixty-four 8-bit data elements.

### BRIEF DESCRIPTION OF THE DRAWINGS

Various examples in accordance with the present disclosure will be described with reference to the drawings, in which:
**FIG. 1** is a block diagram of an embodiment of a processor.
**FIG. 2** is a block flow diagram of an embodiment of a method that may be performed by a processor.
**FIG. 3** is a block diagram of a die having an embodiment of an on-die storage location to store a control value.
**FIG. 4** is a block diagram of a system memory having an embodiment of an architecturally defined data structure to store a control value.
**FIG. 5** is a block diagram of an embodiment of an Intel@ AVX-512 capable processor.
**FIG. 6** is a diagram illustrating an embodiment of a 64-bit mask register.
**FIG. 7** is a block diagram of an embodiment of a processor to perform a processor state save instruction and a processor state restore instruction.
**FIG. 8** illustrates an example computing system.
**FIG. 9** illustrates a block diagram of an example processor and/or System on a Chip (SoC) that may have one or more cores and an integrated memory controller.
**FIG. 10(A)** is a block diagram illustrating both an example in-order pipeline and an example register renaming, out-of-order issue/execution pipeline according to examples.
**FIG. 10(B)** is a block diagram illustrating both an example in-order architecture core and an example register renaming, out-of-order issue/execution architecture core to be included in a processor according to examples.
**FIG. 11** illustrates examples of execution unit(s) circuitry.
**FIG. 12** is a block diagram of a register architecture according to some examples.
**FIG. 13** illustrates examples of an instruction format.
**FIG. 14** illustrates examples of an addressing information field.
**FIG. 15** illustrates examples of a first prefix.
**FIGS. 16(A)****-(D)** illustrate examples of how the R, X, and B fields of the first prefix in **FIG. 15** are used.
**FIGS. 17(A)****-(B)** illustrate examples of a second prefix.
**FIG. 18** illustrates examples of a third prefix.
**FIG. 19** is a block diagram illustrating the use of a software instruction converter to convert binary instructions in a source instruction set architecture to binary instructions in a target instruction set architecture according to examples.

### DETAILED DESCRIPTION OF EMBODIMENTS

The present disclosure relates to methods, apparatus, systems, and non-transitory computer-readable storage media to restrict vector instructions to narrower vectors than those natively supported by a processor. In the following description, numerous specific details are set forth (e.g., specific processor configurations, sequences of operations, microarchitectural details, etc.). However, embodiments may be practiced without these specific details. In other instances, well-known circuits, structures and techniques have not been shown in detail to avoid obscuring the understanding of the description.

Over the years, the width of vectors and vector registers has increased for some processors. By way of example, certain Intel^{®} Advanced Vector Extensions 512 (Intel^{®} AVX-512) capable processors, such as Intel^{®} Xeon^{®} Scalable processors, which are commercially available from Intel Corporation, of Santa Clara, California, have 512-bit vector registers and are capable of operating on 512-bit vectors.

Such wide vectors and vector registers may offer advantages in certain situations. For example, the wide vectors and vector registers may allow a vector instruction to operate on more data elements simultaneously or in parallel. This in turn, may tend to increase performance and/or throughput in certain situations. However, such wide vectors and vector registers may have drawbacks in other situations. For example, as compared to shorter vector registers, the wider vector registers may tend to consume more power, occupy more die space, and increase the cost of manufacturing the processor. Consequently, it may be desirable to have two different types of processors, namely a first type of processors (e.g., higher performance processors) having wider vector registers and supporting wider vectors, and a second type of processors (e.g., more power efficient processors) having only narrower vector registers and supporting only narrower vectors. As used herein, the terms wider and narrower are relative terms (e.g., used relative to one another) not absolute terms (e.g., the wider vector registers are wider than the narrower vector registers).

Often, the same vector instructions for the processors having the wider vector registers may include both wider vector instruction variants and narrower vector instruction variants. These wider and narrower vector instruction variants may be for generally the same vector instruction (e.g., the same instruction operation/functionality, the same instruction encoding scheme, and the same operation code or opcode). As one specific example, the AVX-512 instruction set extension includes an ADDPD (Add Packed Double-Precision Floating-Point Values) includes a wider vector instruction variant that specifies wider vectors (e.g., in 512-bit ZMM vector registers) and two narrower vector instruction variants, one that specifies 256-bit vectors (e.g., in 256-bit YMM vector registers) and another that specifies 128-bit vectors (e.g., in 128-bit XMM vector registers). Both the wider and narrower vector instruction variants of the ADDPD instruction have generally the same instruction operation/functionality, the same instruction encoding scheme, and the same opcode. The wider and narrower vector instruction variants mainly differ in the length of the vectors and vector registers used.

In some embodiments, a processor natively having wider vector registers, and natively supporting operation on wider vectors, may support (e.g., include circuitry to support) being configured or otherwise controlled (e.g., according to a configuration value or other control value) to have a hardware-implemented or hardware-enforced operational mode, operational configuration, or execution environment in which it may only have and/or only support narrower vector registers (i.e., narrower than the wider vector registers) and to only support operation on narrower vectors (i.e., narrower than the wider vectors). In some embodiments, this may include being configured or controlled to only support one or more narrower vector instruction variants, but not one or more wider vector instruction variants, of a set of vector instructions (e.g., at least some, most, a vast majority, or almost all, of a vector instruction set extension) that each have generally the same instruction operation/functionality, the same instruction encoding scheme, and the same opcode for both the wider and narrower vector instruction variants, and that mainly differ in the lengths of the vectors and vector registers used.

As one specific example, in some embodiments, an AVX-512 capable processor natively supporting the AVX-512 instruction set, including supporting operation on 512-bit vectors, and natively having 512-bit ZMM vector registers, may support being controlled according to a control value to have a hardware-implemented or hardware-enforced operational mode, operational configuration, or execution environment in which it may only support a subset of the AVX-512 instruction set, consisting of a vast majority of the narrower 256-bit and 128-bit vector instruction variants of the AVX-512 instruction set, but not the wider/widest 512-bit instruction variants of the AVX-512 instruction set, including supporting operation by these instructions on only 256-bit and 128-bit vectors but not 512-bit vectors, and including supporting operation by these instructions on only 256-bit YMM vector registers and 128-bit XMM vector registers but not 512-bit ZMM vector registers. Advantageously, the ability to control the processor in this way may allow the processor to still take advantage of at least most of the instructions of the vector instruction set extension (e.g., their new operation/functionality, their instruction encoding scheme, etc.), but mainly restrict the lengths of the vectors and vector registers and vectors used.

As used herein, an instruction set that includes both one or more narrower vector instruction variants, as well as one or more wider (e.g., at least the widest) vector instruction variants, of each of at least some (e.g., or most, a vast majority, or almost all) instructions of a vector instruction set, where the narrower and wider vector instruction variants for each instruction have the same instruction encoding scheme, the same opcode, and generally the same operation/functionality, and differ mainly in the lengths of the vectors and vector registers used, is referred to herein as a wider vector length instruction set (IS-W). A processor capable of executing the such an instruction set is referred to herein as an IS-W capable processor.

As used herein, an instruction set that includes one or more narrower vector instruction variants, but not one or more wider (e.g., at least the widest) vector instruction variants, of each of at least some (e.g., or most, a vast majority, or almost all) instructions of a vector instruction set, where the narrower and wider vector instruction variants for each instruction have the same instruction encoding scheme, the same opcode, and generally the same operation/functionality, and differ mainly in the lengths of the vectors and vector registers used, is referred to herein as a narrower vector length restricted instruction set (IS-N). A processor capable of executing the such an instruction set is referred to herein as an IS-N capable processor.

There are various reasons why restricting a processor according to vector/vector register length like this may be useful. One possible reason is that, two different types of processors (e.g., a first type of processor natively having wider vector registers and supporting wider vectors, and a second type of processor natively having only narrower vector registers and supporting only narrower vectors) may be used in virtualized systems to implement virtual machines (VMs). A virtual machine manager (VMM) or hypervisor may want to homogenize these different types of processors through virtualization to be virtual processors of only the second type so that the VMs operate as if they are running on only virtualized processors of the second type, even though the actual physical processors on which the VMs are running may be of the different types. Such homogenization may make it easier to manage VMs (e.g., migrate the VMs within a datacenter or on the cloud between processors that are physically of both the first and second types but are virtualized to be of only the second type). Another possible reason this may be useful is that it may allow the creation of a narrower vector length restricted instruction set (IS-N) capable processor on a wider vector length instruction set (IS-W) capable processor, which software developers may use to develop and/or validate IS-N compatible software. Since the IS-N instruction set may be a subset of the IS-W instruction set, there is a chance that such software may include some instructions of the IS-W instruction set that are not included in the IS-N instruction set, which may lead to exceptions.

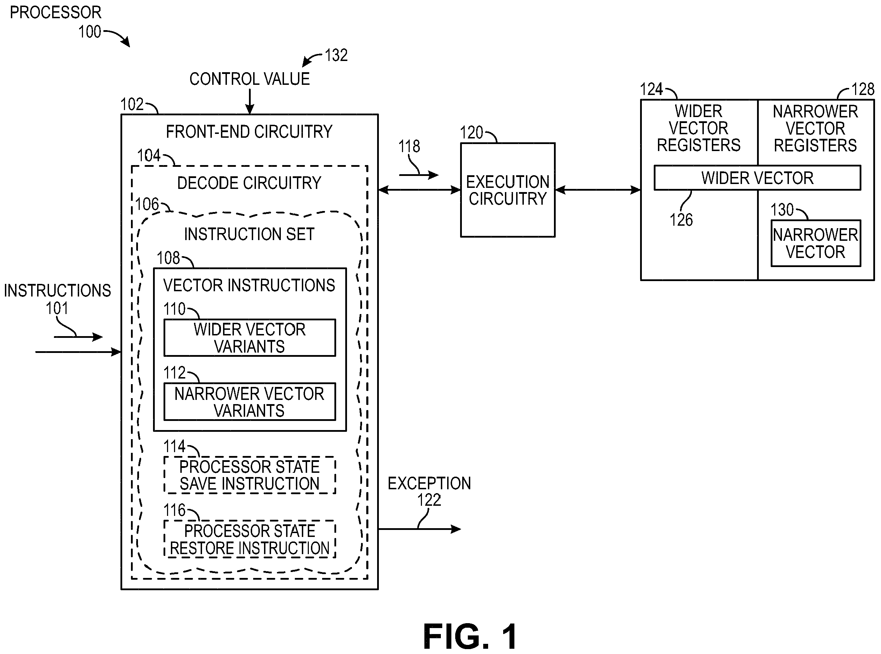

**FIG. 1** is a block diagram of an embodiment of a processor 100. In some embodiments, the processor may be a general-purpose processor (e.g., a general-purpose microprocessor or central processing unit (CPU) of the type used in desktop, laptop, or other computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs). The processor may have any of various complex instruction set computing (CISC) architectures, reduced instruction set computing (RISC) architectures, very long instruction word (VLIW) architectures, hybrid architectures, other types of architectures, or have a combination of different architectures (e.g., different cores may have different architectures). In some embodiments, the processor may include (e.g., be disposed on) at least one integrated circuit or semiconductor die. In some embodiments, the processor may include at least some hardware (e.g., transistors, capacitors, diodes, circuitry, non-volatile memory storing circuit-level instructions/control signals, or the like).

The processor 100 includes front-end circuitry (e.g., a front-end unit) 102. The front-end circuitry may broadly represent circuitry at initial stages of a pipeline of the processor before the execution stage. By way of example, the front-end circuitry may include fetch circuitry (e.g., a fetch unit), and decode circuitry (e.g., a decode unit) coupled with the fetch circuitry, as well as other optional components). The front-end circuitry may receive instructions 101 (e.g., macroinstructions, machine code instructions, or other instructions of an instruction set 106 of the processor). By way of example, the processor (when deployed in a system) may be coupled with system memory (e.g., via a memory controller and one or more interconnects) to receive the instructions.

The front-end circuitry 102 (e.g., decode circuitry 104) may be capable of and/or operative to decode instructions of the instruction set 106 (e.g., vector instructions 108, one or more processor state save instructions 114, one or more processor state restore instructions 116). In some embodiments, the instructions may optionally have the instruction encoding schemes disclosed further below, although the scope of the invention is not so limited. In some embodiments, the front-end circuitry (e.g., the decode circuitry) may include at least one input structure (e.g., a port, interconnect, or interface) coupled to receive the instructions, an instruction recognition and decode logic coupled therewith to recognize and decode the instructions, and at least one output structure (e.g., a port, interconnect, or interface) coupled therewith to output the one or more decoded instructions. The instruction recognition and decode logic may be implemented using various instruction decode mechanisms including, but not limited to, microcode read only memories (ROMs), look-up tables, hardware implementations, programmable logic arrays (PLAs), other mechanisms suitable to implement decode units, and combinations thereof. In some embodiments, the front-end circuitry may include at least some hardware (e.g., one or more of transistors, integrated circuitry, on-die read-only memory or other non-volatile memory storing microcode or other hardware-level instructions, etc.).

The processor also includes wider vector registers 124 and narrower vector registers 128. Each of these vector registers may represent an on-die or on-IC (integrated circuit) storage location that is operative to store vector data. For example, the wider vector registers may be used to store wider vectors (e.g., a wider vector 126), and the narrower vector registers may be used to store narrower vectors (e.g., a narrower vector 130). In some embodiments, the wider vectors may each have at least 256-bits (e.g., are 1024-bits, 512-bits, or 256-bits), and the narrower vectors may each have less bits than the wider vectors (e.g., are 512-bits, 256-bits, 128-bits, or 64-bits). The vector registers may represent architectural (e.g., architecturally visible) registers that are visible to software and/or a programmer and/or are the registers indicated by instructions of the instruction set to identify their operands. These architectural registers are contrasted to other non-architectural registers in a microarchitecture (e.g., temporary registers, reorder buffers, retirement registers, etc.). The vector registers may be implemented in different ways in different microarchitectures and are not limited to any particular design. Examples of suitable types of registers include, but are not limited to, dedicated physical registers, dynamically allocated physical registers using register renaming, and combinations thereof.

The instruction set 106 may include, among other instructions, a set of vector instructions 108. The set of vector instructions may include both wider (e.g., widest) vector instruction variants 110 and one or more narrower vector instruction variants 112. Each of the vector instructions may specify one or more source vectors and one or more destination vectors. Specifically, the wider vector instruction variants 110 may specify one or more wider source vectors and one or more wider destination vectors (e.g., in the wider vector registers 124 or in system memory), and the narrower vector instruction variants 112 may specify one or more narrower source vectors and one or more narrower destination vectors (e.g., in the narrower vector registers 128 or in system memory). The vector instructions may have one or more fields or sets of bits to specify or otherwise indicate the vector registers or memory locations for these source and destination vectors. It is also possible for a vector register to be implicit to a vector instruction without needing to be specified (e.g., the processor may implicitly understand (e.g., from the opcode) that the vector register is to be used without the instruction needing to specify it). Also, it may be implicit for a vector instruction that a vector register specified for a source vector is subsequently to be reused for a destination vector.

Referring again to **FIG. 1****,** in some embodiments, the front-end circuitry 102 (e.g., the decode circuitry 104) may be coupled to receive a control value 132. In some embodiments, the control value may be stored in an on-die storage location that is on a die on which the processor is disposed. In other embodiments, the control value may be stored in an architecturally defined data structure (e.g., a virtual machine control structure (VMCS) or other virtualization control structure) stored in system memory. Alternatively, the control value may be stored elsewhere. In some embodiments, the control value may either a first value or a second value different than the first value (e.g., an optionally additional values). In some embodiments, the control value may control the operation of the front-end circuitry (e.g., the decode circuitry), for example, how instructions are decoded (e.g., whether exceptions are raised, whether instructions are prevented from being executed, whether decoded instructions are output to execution circuitry, etc.). In some embodiments, such control may be based on the length of the vectors that the instructions specify (e.g., based on whether they specify any wider vectors or only narrower vectors).

In some embodiments, when the control value 132 is a first value, the front-end circuitry 102 (e.g., the decode circuitry 104) may decode each of the vector instructions 108 (e.g., having a respective instruction operation/functionality and a respective opcode value) into one or more corresponding decoded instructions, and output the one or more corresponding decoded instructions so they may proceed to be executed, regardless of whether the vector instructions 108 specify either wider vectors (e.g., wider vector registers 124) of a wider vector width or narrower vectors (e.g., narrower vector registers 128) of a narrower vector width. The wider vector width being wider than the narrower vector width. The decoded instructions may include microinstructions, micro-operations, micro-code entry points, or other relatively lower-level instructions or control signals that correspond to the relatively higher-level macroinstructions, machine-code instructions, or other instructions that are decoded.

In some embodiments, when the control value 132 is a second value that is different than the first value, the front-end circuitry 102 (e.g., the decode circuitry 104) may decode each of the narrower vector instruction variants 112 (e.g., having the same respective instruction operation/functionality and the same respective opcode values) into one or more corresponding decoded instructions, and output the one or more corresponding decoded instructions so they may proceed to be executed, since the narrower vector instruction variants 112 specify only narrower vectors (e.g., narrower vector registers 128) of the narrower vector width, but do not specify any wider vectors (e.g., wider vector registers 124) of the wider vector width. In some embodiments, when the control value is the second value, the front-end circuitry 102 (e.g., the decode circuitry 104) may prevent execution of each of the wider vector instruction variants 110 (e.g., having the same respective instruction operation/functionality and the same respective opcode values) since the wider vector instruction variants 110 specify wider vectors (e.g., wider vector registers 124) of the wider vector width. The execution of these wider vector instruction variants 110 may be prevented in different ways, such as, for example, by the front-end circuitry 102 (e.g., the decode circuitry 104) raising, taking, or otherwise causing a fault or other exception (e.g., an undefined opcode exception) 122, not outputting one or more decoded instructions corresponding to these wider vector instruction variants to execution circuitry 120, controlling the execution circuitry 120 to not execute such decoded instructions, or the like.

Accordingly, in some embodiments, when the control value 132 is the first value, the processor may not be restricted based on vector length, but rather may be able to have and/or use both the wider (e.g., widest) vector registers 124 as well as the narrower vector registers 128, may be able to operate on both wider vectors (e.g., wider vector 126) as well as narrower vectors (e.g., narrower vector 130), and may be able to execute the full set of vector instructions 108, including both the wider vector instruction variants 110 and the narrower vector instruction variants 112. In contrast, in some embodiments, when the control value 132 is the second value, the processor may be restricted based on vector length, and may be controlled to only have and/or use the narrower vector registers 128 but not the wider vector registers 124, to only operate on narrower vectors (e.g., the narrower vector 130) but not on wider vectors (e.g., the wider vector 126), and to only execute the narrower vector instruction variants 112 but not the wider vector instruction variants 110. In some embodiments, when the control value is the second value, the processor, which may be a wider vector length instruction set (IS-W) capable processor, may be controlled to be and/or to be restricted to operating as a narrower vector length restricted instruction set (IS-N) capable processor.

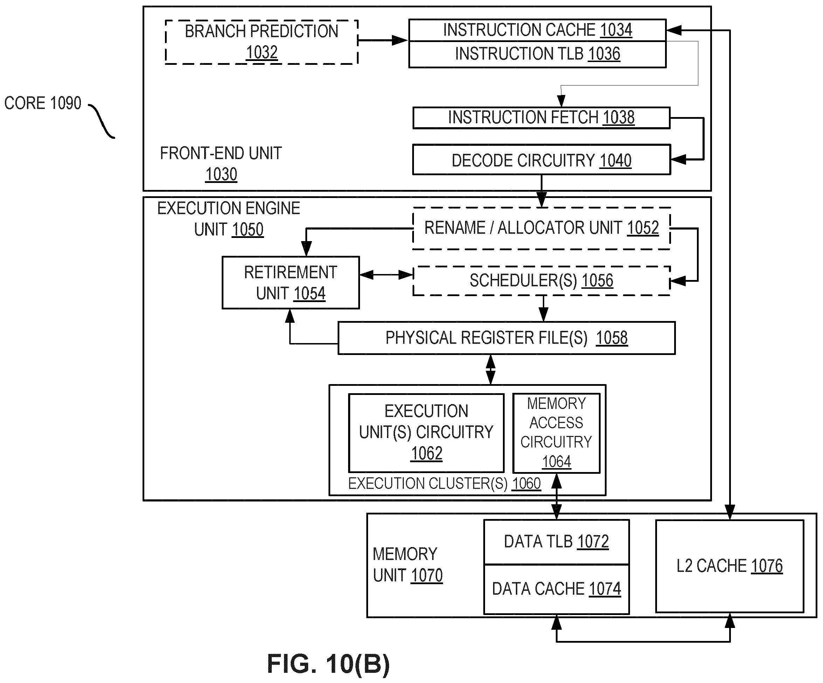

Referring again to **FIG. 1****,** the processor also includes execution circuitry 120 (e.g., one or more execution units). By way of example, the execution circuitry may include one or more vector execution units (e.g., one or more SIMD execution units), the execution cluster(s) 1060 shown in **FIG. 10(B)****,** or the like. The execution circuitry is coupled with the front-end circuitry 102 to receive the one or more decoded instructions 118, and is coupled with the vector registers 124, 128 to receive source vectors therefrom and to store result vectors thereto. When execution of the instructions is not prevented based on the instructions specifying wider vectors when the control value is the first value as discussed above, the execution unit may be capable of and/or operative to execute the decoded instructions output from the front-end circuitry. The execution unit and/or the processor may include specific or particular logic (e.g., transistors, integrated circuitry, or other hardware potentially combined with firmware (e.g., instructions stored in non-volatile memory) and/or software) that is operative to execute the decoded instructions.

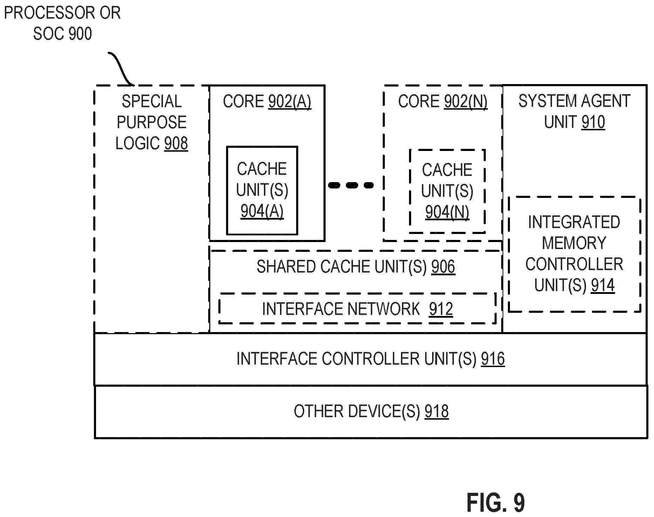

To avoid obscuring the description, a relatively simple processor 100 has been shown and described. However, the processor may optionally include other processor components. For example, various embodiments may include various combinations and configurations of the components shown and described for any of **FIGS. 9****,** **10B****, and** **11****-12.** All the components of the processor may be coupled together to allow them to operate as intended.

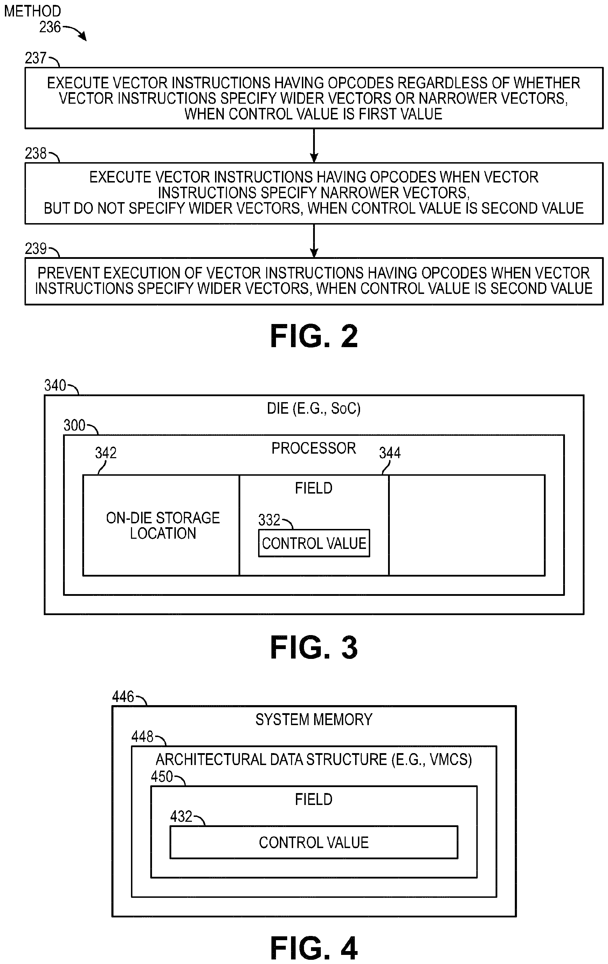

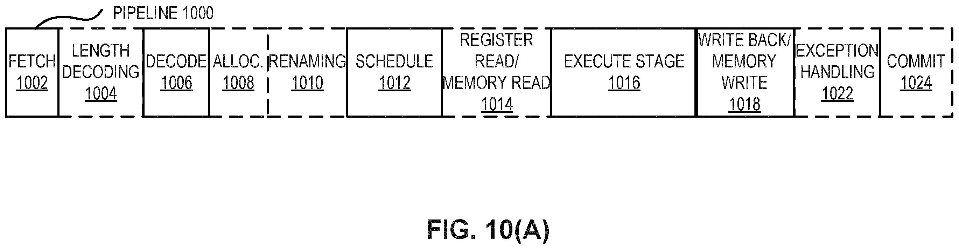

**FIG. 2** is a block flow diagram of an embodiment of a method 236 that may be performed by a processor. In some embodiments, the method 236 may be performed by and/or with the processor of **FIG. 1****.** The components, features, and specific optional details described herein for the processor of **FIG. 1****,** also optionally apply to the method 236. Alternatively, the method 236 may be performed by and/or within a similar or different processor or apparatus (e.g., a processor core as shown in **FIG. 10(B)****,** or a pipeline as detailed below). Moreover, the processor of **FIG. 1** may perform methods the same as, similar to, or different than the method 236.

The method includes executing first instances/occurrences of vector instructions (e.g., both wider and narrower vector instruction variants) having respective opcode values and an instruction encoding scheme/format regardless of whether they specify wider vectors of a wider vector width or narrower vectors of a narrower vector width, when a control value is a first value, at block 237. The method includes executing instances/occurrences of vector instructions (e.g., the narrower vector instruction variants) having the same respective opcode values and the same instruction encoding scheme/format, when they (e.g., the narrower vector instruction variants) specify narrower vectors of the narrower vector width, but do not specify wider vectors of the wider vector width, when the control value is a second value different than the first value, at block 238. The method also includes preventing execution of third instances/occurrences of vector instructions (e.g., the wider vector instruction variants) having the same respective opcode values and the same instruction encoding scheme/format, when they (e.g., the wider vector instruction variants) specify wider vectors of the wider vector width, when the control value is the second value, at block 239. Preventing the execution of these instructions may include raising, taking, or otherwise causing a fault or other exception (e.g., an undefined opcode exception), not outputting one or more decoded instructions corresponding to these wider vector instruction variants to execution circuitry, controlling the execution circuitry to not execute such decoded instructions, or the like.

Accordingly, in some embodiments, when the control value is the first value, operation and/or execution may not be restricted based on vector length, but rather may be able to have and/or use both the wider (e.g., widest) vector registers as well as the narrower vector registers, may be able to operate on both wider vectors as well as narrower vectors, and may be able to execute the full set of vector instructions, including both the wider vector instruction variants and the narrower vector instruction variants. In contrast, in some embodiments, when the control value is the second value, operation and/or execution may be restricted based on vector length, and may be controlled to only have and/or use the narrower vector registers but not the wider vector registers, to only operate on narrower vectors but not on wider vectors, and to only execute the narrower vector instruction variants but not the wider vector instruction variants. In some embodiments, when the control value is the second value, operation and/or execution on a wider vector length instruction set (IS-W) capable processor, may be controlled and/or restricted to operation and/or execution of a narrower vector length restricted instruction set (IS-N).

The method 236 has been described in a relatively basic form, but operations may optionally be added to and/or removed from the method. For example, other optional operations described herein may optionally be added to the method and one of the illustrated operations may optionally be removed from the method. In addition, while the illustration shows a particular order of operations according to embodiments, that order is exemplary. Alternate embodiments may perform the operations in different order, overlap certain operations, etc. For example, the operations of blocks 238-239 may optionally be performed before the operation of block 237.

**FIG. 3** is a block diagram of a die 340 (e.g., a semiconductor die, a system-on-chip (SoC), an integrated circuit, etc.) having an example embodiment of an on-die storage location 342 to store a control value 332 (e.g., the control value 132 of **FIG. 1**). By way of example, the on-die storage location may include a model specific register (MSR), a control register, a configuration register, other type of register, or the like. As shown, the on-die storage location may have a dedicated architecturally defined field (e.g., one or more bits) where the control value is to be stored. In the illustrated embodiment, the on-die storage location is within a processor 300 disposed on the die. Alternatively, the on-die storage location may optionally be outside of the processor but coupled with the processor.

**FIG. 4** is a block diagram of a system memory 446 having an example embodiment of an architecturally defined data structure 448 to store a control value 432 (e.g., the control value 132 of **FIG. 1**). By way of example, the architecturally defined data structure may include virtual machine control structure (VMCS), a virtual machine control block (VMCB), other virtualization control structure, or other architecturally defined data structure. As shown, the architectural data structure may have a dedicated architecturally defined field 450 (e.g., one or more bits) where the control value is to be stored.

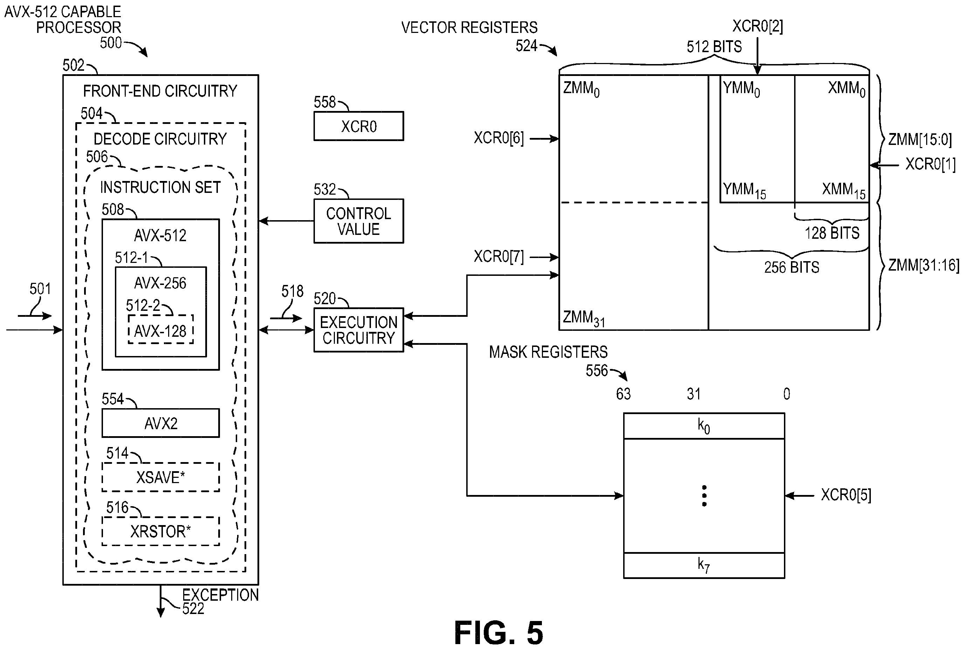

**FIG. 5** is a block diagram of an embodiment of an Intel@ AVX-512 capable processor 500. The processor includes front-end circuitry 502 (e.g., a front-end unit), optional decode circuitry 504 (e.g., a decode unit), execution circuitry 520 (e.g., one or more vector execution units, execution cluster(s) 1060 shown in **FIG. 10(B)****,** etc.), and vector registers 524. Unless otherwise specified, the processor 500, the front-end circuitry 502, the decode circuitry 504, the execution circuitry 520, and the vector registers 524 may each optionally be similar to or the same as (e.g., have features or characteristics that are similar to or the same as) the correspondingly named components of **FIG. 1****.** To avoid obscuring the description, the different and/or additional features or characteristics of the embodiment of **FIG. 5** will primarily be described, without repeating all the features or characteristics which may optionally be similar to or the same as those already described for the embodiment of **FIG. 1****.**

The vector registers 524 include up to thirty-two (e.g., in 64-bit mode) 512-bit vector registers ZMM0-ZMM31, which more broadly or generically are just a plurality of 512-bit or otherwise wider/widest vector registers. The 512-bit vector registers ZMM0-ZMM31 are operative to store 512-bit vectors. The least significant 256-bits of the lower indexed sixteen registers ZMM0-ZMM15 are aliased or overlaid on sixteen corresponding 256-bit vector registers YMM0-YMM15, which more broadly or generically are just a plurality of 256-bit or otherwise narrower vector registers. The 256-bit vector registers YMM0-YMM15 are operative to store 256-bit vectors. The least significant 128-bits of the sixteen 256-bit vector registers YMM0-YMM15 are aliased or overlaid on sixteen corresponding 128-bit vector registers XMM0-XMM15, which more broadly or generically are just a plurality of 128-bit or otherwise even narrower vector registers. The 128-bit vector registers XMM0-XMM15 are operative to store 128-bit vectors. Vectors of data elements of different data element sizes may be stored in these registers, including at least 8-bit, 16-bit, 32-bit, and 64-bit data elements.

Also shown is a set of eight operation mask (opmask) or mask registers k0-k7 556, which more broadly or generically are just a plurality of mask registers. Each of the registers is 64-bits. Each of these registers may be used to store an opmask or mask. The mask may represent a predicate operand or conditional control operand that is used to predicate, conditionally control, or mask whether corresponding operations of a vector instruction are to be performed and/or whether corresponding results of the operations are to be stored. Typically, the masking or predication may be at per-data element granularity so that operations on different data elements or different pairs of corresponding data elements may be predicated or conditionally controlled separately and/or independently of others. The mask may have a different bit for each of these different data elements or different pairs of corresponding data elements and the value of the bit may control whether a corresponding operation is to be performed and/or whether a corresponding result of the operation is to be stored. Different options are possible when a corresponding operation is not to be performed and/or a corresponding result data element is to be stored. In some embodiments, zeroing masking may be used. In zeroing masking, the corresponding masked-out result data elements in the destination register may be zeroed-out. In other embodiments, merging masking may be used. In merging masking, the corresponding masked-out result data elements in the destination register may retain their initial values instead of being updated.

The front-end circuitry 502 may be coupled to receive instructions 501, as previously described. The front-end circuitry (e.g., the decode circuitry 504) may be capable of and/or operative to decode instructions of an instruction set 506 of the processor, as previously described. In the case of the AVX-512 capable processor, the instruction set may include, among other instruction set extensions, an AVX-512 instruction set extension 508 (which more broadly or generically is a vector length unrestricted instruction set (e.g., a wider vector length instruction set (IS-W) as described above)), an Intel@ Advanced Vector Extensions 2 (Intel^{®} AVX2) instruction set extension 554, an XSAVE^{∗} set of one or more processor state save instructions 514, and a XRSTOR* set of one or more processor state restore instructions 516. The XSAVE^{∗} instructions represent processor state save instructions and the XRSTOR* instructions represent processor state restore instructions.

The AVX2 instruction set extension 554 adds, among others, many vector instructions. The vector instructions of the AVX2 instruction set extension do not specify or use either 512-bit vectors or the thirty-two 512-bit vector registers ZMM0-ZMM31. Rather, the vector instructions of the AVX2 instruction set extension specify 256-bit source and destination vectors (e.g., in the sixteen 256-bit vector registers YMM0-YMM15) or 128-bit source and destination vectors (e.g., in the sixteen 128-bit vector registers XMM0-XMM15). The vector instructions of the AVX2 instruction set extension have a VEX encoding scheme/format.

The AVX-512 instruction set extension 508 was added after the AVX2 instruction set extension 554. The AVX-512 instruction set extension adds, among others, many additional vector instructions having additional and/or different instruction operations and functionalities not found in AVX2. The vector instructions of AVX-512 include wider (widest) instruction variants that specify 512-bit source and destination vectors (e.g., in the thirty-two 512-bit vector registers ZMM0-ZMM31) as well as narrower instruction variants that specify 256-bit source and destination vectors (e.g., in the thirty-two 256-bit vector registers YMM0-YMM31) or 128-bit source and destination vectors (e.g., in the thirty-two 128-bit vector registers XMM0-XMM31). AVX-512 extends the number of registers to thirty-two 512-bit vector registers ZMM0-ZMM31. Most of the vector instructions of the AVX-512 instruction set extension also specify operation masks (opmasks) or masks used for conditional processing or predication in the eight 64-bit mask registers k0-k7 556. The use of masks in the eight 64-bit mask registers k0-k7 was added as part of the AVX-512 instruction set extension and is not supported by AVX2. The vector instructions of the AVX-512 instruction set extension have an EVEX encoding scheme/format, which is different than the VEX encoding scheme/format used for the AVX2 vector instructions. The EVEX encoding scheme is discussed further below.

As mentioned elsewhere herein, embodiments may limit or restrict the maximum vector length used by vector instructions (e.g., opcodes). For example, embodiments may enable narrower (e.g., narrowest) vector instruction variants of the instructions (e.g., opcodes) while disabling wider (e.g., widest) vector instruction variants of the instructions. As shown, the AVX-512 instruction set extension includes a narrower vector instruction variant subset referred to as a 256-bit restricted AVX-512 (AVX-256) instruction set 512-1 (which more broadly or generically is a vector length restricted instruction set (e.g., a narrower vector length restricted instruction set (IS-N) as described elsewhere herein)). In some embodiments, AVX-256 instruction set may in turn optionally include a narrower vector instruction variant subset referred to as a 128-bit restricted AVX-512 (AVX-128) instruction set 512-2 (which more broadly or generically is a vector length restricted instruction set (e.g., a narrower vector length restricted instruction set (IS-N) as described elsewhere herein)).

As used herein, the 256-bit restricted AVX-512 (AVX-256) instruction set 512-1 refers to an instruction set that includes 128-bit vector and 256-bit vector instruction variants, but not 512-bit vector instruction variants, of each of at least most (or a vast majority, or almost all) of the instructions (e.g., opcodes) of the AVX-512 instruction set 508 (e.g., including instructions/opcodes not included in AVX2), where the 128-bit vector, 256-bit vector, and 512-bit vector instruction variants for each instruction have the same EVEX instruction encoding scheme/format, the same opcode, generally the same instruction operation/functionality, indicate any of the thirty-two 256-bit vector registers YMM0-YMM31 or any of the thirty-two 128-bit vector registers XMM0-XMM31 but not any of the thirty-two 512-bit vector registers ZMM0-ZMM31, and indicate one of the mask registers k0-k7 556 as source of a mask used for predication or conditional processing. A physical AVX-512 capable processor that is limited or restricted to using the AVX-256 instruction set 512-1 and is not able to use the full AVX-512 instruction set 508 is referred to herein as a 256-bit restricted AVX-512 (AVX-256) capable processor.

As used herein, the 128-bit restricted AVX-512 (AVX-128) instruction set 512-2 refers to an instruction set that includes 128-bit vector instruction variants, but not 512-bit vector or 256-bit vector instruction variants, of each of at least most (or a vast majority, or almost all) of the instructions (e.g., opcodes) of the AVX-512 instruction set 508 (e.g., including instructions/opcodes not included in AVX2), where the 128-bit vector, 256-bit vector, and 512-bit vector instruction variants for each instruction have the same EVEX instruction encoding scheme/format, the same opcode, generally the same instruction operation/functionality, indicate any of the thirty-two 128-bit vector registers XMM0-XMM31 but not any of the thirty-two 512-bit vector registers ZMM0-ZMM31 or any of the thirty-two 256-bit vector registers YMM0-YMM31, and indicate one of the mask registers k0-k7 556 as source of a mask used for predication or conditional processing. A physical AVX-512 capable processor that is limited or restricted to using the AVX-128 instruction set 512-2, and is not able to use the AVX-256 instruction set 512-1 or the full AVX-512 instruction set 508, is referred to herein as a 128-bit restricted AVX-512 (AVX-128) capable processor.

The processor also includes an extended control register (XCRO) 558, which more broadly or generically is just a control and/or configuration register. XCRO includes several bits to provide control. Some of these bits are used to control whether AVX2 and AVX-512 are enabled or disabled.

Bits stored in bit positions or fields XCR0[2:1] correspond to two different state components used for register state used by AVX2. A bit stored in bit position or field XCR0[1] is either to be set to binary one to enable, or cleared to binary zero to disable, use of the sixteen 128-bit vector registers XMM0-XMM15. A bit stored in bit position or field XCR0[2] is either to be set to binary one to enable, or cleared to binary zero to disable, use of the sixteen 256-bit vector registers YMM0-YMM15. These bits may both be set to enable the AVX2 instruction set.

Bits stored in bit positions or fields XCR0[7:5] correspond to three additional state components used for the additional register state used by AVX-512 not used by AVX2. A bit stored in bit position or field XCR0[5] is either to be set to binary one to enable, or cleared to binary zero to disable, use of the set of eight 64-bit mask registers k0-k7. A bit stored in bit position or field XCR0[6] is either to be set to binary one to enable, or cleared to binary zero to disable, use of a most significant 256-bits of a first set of sixteen lower indexed 512-bit vector registers ZMM0-ZMM15, which more broadly or generically are just 512-bit or otherwise wider/widest vector registers. These sixteen 256-bit values are denoted ZMM0_H - ZMM15_H (ZMM_Hi256 state). A bit stored in bit position or field XCR0[7] is either to be set to binary one to enable, or cleared to binary zero to disable, use of a second set of sixteen higher indexed 512-bit vector registers ZMM16-ZMM31. This is referred to as Hi16_ZMM state. AVX512 may be enabled by further setting all the bits XCR0[7:5, 2:1]. AVX2 may be enabled with AVX-512 disabled by setting bits XCR0[2:1] and clearing bits XCR0[7:5].

One challenge is that XCR0[7] either entirely enables all 512-bits of each of ZMM16-ZMM32 or none of the bits of each of ZMM16-ZMM32. That is, ZMM16-ZMM32 are enabled or disabled as a single state component using XCR0[7]. Existing bits in XCRO, or otherwise defined in the architecture of AVX-512, do not allow separately enabling only the least significant 256-bit halves of ZMM16-ZMM32. Similarly, another challenge is that XCR0[5] either entirely enables all 64-bits of each of k0-k7 or none of the bits of each of each of k0-k7. That is, k0-k7 are enabled or disabled as a single state component using XCR0[5]. Existing bits in XCRO, or otherwise defined in the architecture of AVX-512, do not allow separately enabling only the least significant 32-bit halves of k0-k7. That is, both AVX-512 and AVX-256 instruction sets are enabled and disabled using the exact same XCRO bits, namely XCR0[7:5, 2:1]. As a result, the existing bits in XCRO cannot be used to create an AVX-256 capable processor or an AVX-128 capable processor on an AVX-512 capable processor.

Referring again to **FIG. 5****,** in some embodiments, the front-end circuitry 502 (e.g., the decode circuitry 504) may be coupled to receive a control value 532. In some embodiments, the control value may be stored in an on-die storage location that is on a die (e.g., a system-on-chip (SoC)) on which the AVX-512 processor is disposed (e.g., the on-die storage location 342). In other embodiments, the control value may be stored in an architecturally defined data structure (e.g., a virtual machine control structure (VMCS)) stored in system memory (e.g., the architecturally defined data structure 448). In still other embodiments, the control value may be stored in another type of storage location. In some embodiments, the control value may have at least either a first value or a second value different than the first value.

In some embodiments, when bits XCR0[7:5, 2:1] are set, and when the control value 532 is a first value, the front-end circuitry (e.g., the decode circuitry) may be operative to decode each of the vector instructions of the AVX-512 instruction set 508 (e.g., having a respective instruction operation/functionality and a respective opcode) into one or more corresponding decoded instructions, and output the one or more corresponding decoded instructions 518 so they may proceed to be executed, regardless of whether the vector instructions of the AVX-512 instruction set 508 specify a 512-bit vector (e.g., one of the thirty-two 512-bit vector registers ZMM0-ZMM31), or a 256-bit vector (e.g., one of the sixteen 256-bit vector registers YMM0-YMM15), or a 128-bit vector (e.g., one of the sixteen 128-bit vector registers XMM0-XMM15).

In some embodiments, when bits XCR0[7:5, 2:1] are set, and when the control value 532 is a second value different than the first value, the front-end circuitry 502 (e.g., the decode circuitry 504) may be operative to decode each of the vector instructions of the AVX-256 instruction set 512-1 (e.g., having the same respective instruction operation/functionality and the same respective opcode) into one or more corresponding decoded instructions 518, and output the one or more corresponding decoded instructions so they may proceed to be executed, since the vector instructions of the AVX-256 instruction set 512-1 specify only 256-bit vectors (e.g., in the thirty-two 256-bit vector registers YMM0-YMM31), or 128-bit vectors (e.g., in the thirty-two 128-bit vector registers XMM0-XMM31) but do not specify any 512-bit vectors (e.g., in the thirty-two 512-bit vector registers ZMM0-ZMM31).

In some embodiments, when bits XCR0[7:5, 2:1] are set, and when the control value 532 is a second value different than the first value, the front-end circuitry 502 (e.g., the decode circuitry 504) may be operative to prevent execution of the vector instructions of the AVX-512instruction set not found in the AVX-256 instruction set 512-1 (e.g., the 512-bit vector instruction variants of the AVX-512 instructions), having the same respective instruction operation/functionality and the same respective opcode, since these instructions specify 512-bit vectors (e.g., in the thirty-two 512-bit vector registers ZMM0-ZMM31). The execution of these instructions may be prevented in different ways, such as, for example, by the front-end circuitry 502 (e.g., the decode circuitry 504) raising, taking, or otherwise causing a fault or other exception (e.g., an undefined opcode exception) 522, not outputting one or more decoded instructions 518 corresponding to these wider vector instruction variants to execution circuitry 520, controlling the execution circuitry 520 to not execute such decoded instructions, or the like.

Accordingly, in some embodiments, when the control value 532 is the first value, the processor may not be restricted based on vector length, but rather may be able to have and/or use both the wider (e.g., widest) 512-bit ZMM vector registers as well as the narrower 256-bit YMM and 128-bit XMM vector registers, may be able to operate on both wider 512-bit vectors as well as narrower 256-bit and 128-bit vectors, and may be able to execute the full set of AVX-512 vector instructions 508. In contrast, in some embodiments, when the control value 532 is the second value, the processor may be restricted based on vector length, and may be controlled to only have and/or use narrower (e.g., 256-bit YMM and/or 128-bit XMM) vector registers but not the wider (e.g., widest) 512-bit ZMM vector registers, to only operate on narrower (e.g., 256-bit and/or 128-bit) vectors but not on wider (e.g., widest) 512-bit vectors, and to only execute a narrower vector instruction variant subset (e.g., the AVX-256 512-1 and/or the AVX-128 512-2 instruction set subsets) of the AVX-512 instruction set 508. In some embodiments, when the control value is the second value, the processor, which may natively be an AVX-512 capable processor, may be controlled to be, or be restricted to operating as, or be limited to having an execution environment of, an AVX-256 capable processor operating only on the AVX-256 instruction set subset 512-1, or an AVX-128 capable processor operating only on the AVX-128 instruction set subset 512-2. In some embodiments, only any two of AVX-512, AVX-256, and AVX-128 may be implemented and the control value 532 may accordingly only need to have two different values (e.g., a first value and a second value), which may optionally be implemented as a single bit. In other embodiments, all three of AVX-512, AVX-256, and AVX-128 may optionally be implemented and the control value 532 may accordingly have at least three different values (e.g., a first value, a second value, and a third value), which may be implemented as two or more bits.

It is to be appreciated that **FIG. 5** is just one illustrative example and that many variations are possible and contemplated. For example, instead of the ZMM, YMM, and XMM vector registers, other wider/widest (e.g., 512-bit), narrower (e.g., 256-bit), and still narrower (e.g., 128-bit) vector registers may optionally be used. As another example, instead of the extended control register XCRO and its bits XCR0[5:7] one or more bits in another control and/or configuration register may optionally be used. As another example, instead of the mask registers k0-k7 other mask registers may optionally be used. As yet another example, instead of the AVX-512, AVX-256, and AVX-128 instruction sets, another vector length unrestricted instruction set (e.g., a wider vector length instruction set (IS-W) as described above) and at least one vector length restricted instruction set (e.g., a narrower vector length restricted instruction set (IS-N) as described above) may optionally be used. Any combination of these variations may also optionally be used.

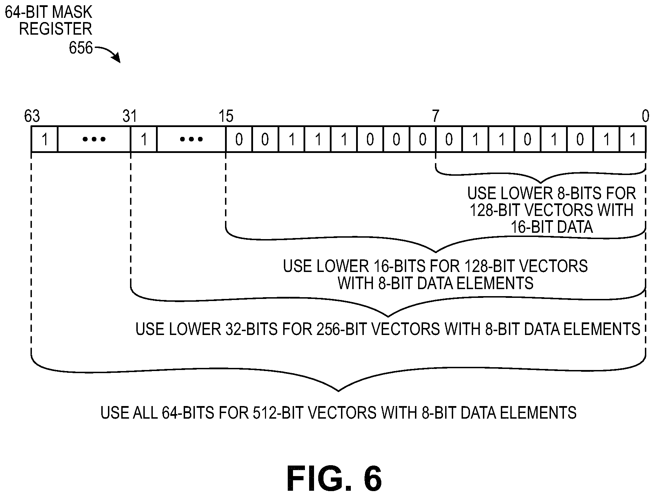

**FIG. 6** is a diagram illustrating an example embodiment of a 64-bit mask register 656 and showing that the number of bits that are used as a mask and/or for masking depends upon the vector width and the data element width. The 64-bit mask register may represent one of the mask registers k0-k7 556 of **FIG. 5****.** Depending upon the combination of the packed data width and the data element width, either all 64-bits, or only a subset of the 64-bits, may be used as a mask and/or for masking. When a single per-element masking control bit is used for masking, the number of bits in the mask register that are used for the mask and/or for masking is equal to the vector width in bits divided by the data element width in bits. In addition, the bits used for the mask and/or for masking start with the least-significant bits of the mask register.

Several illustrative examples are shown. Proceeding from top to bottom through the examples, when the vector width is 128-bits and the data element width is 16-bits, then only the least-significant 8-bits of the 64-bit mask register are used for the mask and/or for masking. When the vector width is 128-bits and the data element width is 8-bits, then only the least-significant 16-bits of the 64-bit mask register are used for the mask and/or for masking. When the vector width is 256-bits and the data element width is 8-bits, then only the least-significant 32-bits of the 64-bit mask register are used for the mask and/or for masking. When the vector width is 512-bits and the data element width is 8-bits, then all 64-bits of the 64-bit mask register are used for the mask and/or for masking.

Notice that when the smallest data element is 8-bits, the most-significant 32-bits of the mask register are only used for 512-bit vectors but are not used for 256-bit vectors or 128-bit vectors. In some embodiments, the most-significant 32-bits are not used when the vector length is restricted to 256-bits (e.g., for AVX-256) and their use may be disabled. In some embodiments, the most-significant 48-bits are not used when the vector length is restricted to 128-bits (e.g., for AVX-128).

In various situations, processors may change processor state or context. For example, a processor may change processor state when switching between software threads. For example, a first processor state of a first thread may be saved from the processor to a first processor state save region in system memory, and a second processor state of a second thread may be restored from a second processor state save region in system memory and loaded into the processor. The processor state or context saved and restored may represent at least some of the processor state or context stored in architectural registers (e.g., vector registers, mask registers), and control registers of the processor as well as other processor state or context.

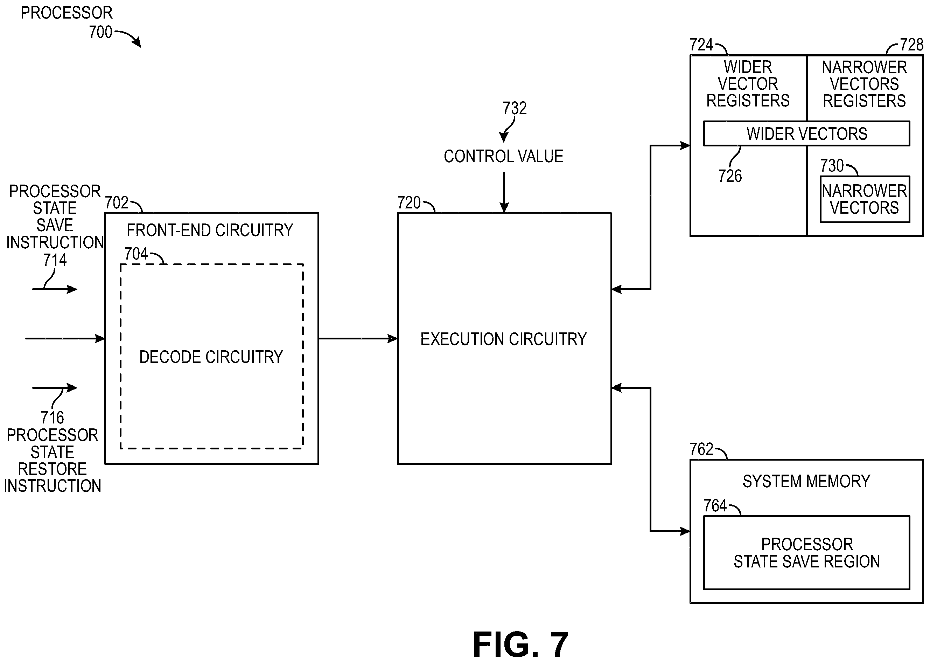

**FIG. 7** is a block diagram of an embodiment of a processor 700 to perform a processor state save instruction 714 and a processor state restore instruction 716. Also shown is a system memory 762 which may be coupled with the processor when the processor is deployed in a system. The processor includes front-end circuitry 702 (e.g., a front-end unit), optional decode circuitry 704 (e.g., a decode unit), execution circuitry 720, wider vector registers 724, and narrower vector registers 728. Unless otherwise specified, the processor 700, the front-end circuitry 702, the decode circuitry 704, the execution circuitry 720, the wider vector registers 724, and the narrower vector registers 728 may each optionally be similar to or the same as (e.g., have features or characteristics that are similar to or the same as) the correspondingly named components of **FIG. 1****.** To avoid obscuring the description, the different and/or additional features or characteristics of the embodiment of **FIG. 7** will primarily be described, without repeating all the features or characteristics which may optionally be similar to or the same as those already described for the embodiment of **FIG. 1****.**

The front-end circuitry 702 may be coupled to receive the processor state save instruction 714 and the processor state restore instruction 716, as previously described. The front-end circuitry (e.g., the decode circuitry 504) may be capable of and/or operative to decode the processor state save instruction and the processor state restore instruction, as previously described. In some embodiments, the processor state save instruction may specify destination memory address information corresponding to a destination location (e.g., a 64-byte aligned base address) in system memory corresponding to a processor state save area where it is to store processor state. In some embodiments, the processor state restore instruction may specify source memory address information corresponding to a source location (e.g., a 64-byte aligned base address) in system memory corresponding to the processor state save area from where it is to restore processor state. In some embodiments, these instructions may specify additional information (e.g., in one or more general-purpose registers, control registers, configuration registers, or a combination thereof) to indicate which processor state is to be saved or restored, respectively.

The execution circuitry 720 is coupled with the front-end circuitry 702 to receive one or more decoded instructions decoded from the processor state save instruction, and to receive one or more decoded instructions decoded from the processor state restore instruction. The execution circuitry is also coupled with the wider vector registers 724 and the narrower vector registers 728. The wider vector registers may store wider vectors 726 representing processor state, and the narrower vector registers may store narrower vectors 730 representing processor state. The execution circuitry may be capable of and/or operative to execute the decoded instructions output from the front-end circuitry for each of the processor state save instruction and the processor state restore instruction and/or to perform operations corresponding to each of the processor state save instruction and the processor state restore instruction. The execution circuitry may include processor state management circuitry, such as, for example, microcode logic or circuitry, state machine logic or circuitry, programmable logic or circuitry, or any other form of logic or circuitry capable of implementing the processor state save instruction and the processor state restore instruction.

In some embodiments, the execution circuitry 720 is also coupled to receive a control value 732. The control value may optionally be the same as or similar to other control values disclosed herein (e.g., the control values 132, 332, 432, 532). In some embodiments, the control value 732 may be operative to control how the execution circuitry 720 saves and restores processor state associated with the wider vector registers 724 and the narrower vector registers 728.

In some embodiments, the execution circuitry may perform operations corresponding to the processor state save instruction, including to: (1) save processor state (e.g., wider vectors 726) from the wider vector registers 726 of the processor to a processor state save region 764 in system memory 762, when the control value is a first value; and (2) save processor state (e.g., narrower vectors 726) from the narrower vector registers 728 of the processor to the processor state save region 764, without saving processor state (e.g., wider vectors 726) from the wider vector registers 726 of the processor to the processor state save region 764, when the control value is a second value different than the first value.

In some embodiments, the operations corresponding to the processor state save instruction may also optionally include to: (1) save processor state (e.g., 64-bit or otherwise wider masks) from 64-bit or otherwise wider mask registers of the processor to the processor state save region 764 in the system memory 762, when the control value is the first value; and (2) save processor state (e.g., 32-bit or otherwise narrower masks) from 32-bit or otherwise narrower mask registers of the processor to the processor state save region 764, without saving processor state (e.g., 64-bit or otherwise wider masks) from 64-bit or otherwise wider mask registers of the processor to the processor state save region 764, when the control value is the second value.

In some embodiments, the execution circuitry may perform operations corresponding to the processor state restore instruction, including to: (1) restore processor state (e.g., wider vectors) from the processor state save region 764 in system memory 762 to the wider vector registers 724 of the processor (e.g., as wider vectors 726), when the control value is a first value; and (2) restore processor state (e.g., narrower vectors) from the processor state save region 764 to the narrower vector registers 728 of the processor (e.g., as narrower vectors 730), without restoring processor state (e.g., wider vectors) from the processor state save region 764 to the wider vector registers 724 of the processor, when the control value is a second value different than the first value.

In some embodiments, the operations corresponding to the processor state restore instruction may also optionally include to: (1) restore processor state (e.g., 64-bit or otherwise wider masks) from the processor state save region 764 in system memory 762 to 64-bit or otherwise wider mask registers of the processor, when the control value is the first value; and (2) restore processor state (e.g., 32-bit or otherwise narrower masks) from the processor state save region 764 to 32-bit or otherwise narrower mask registers of the processor, without restoring processor state (e.g., 64-bit or otherwise wider masks) from the processor state save region 764 to 64-bit or otherwise wider mask registers of the processor, when the control value is the second value.

Various different versions of the processor state save and restore instructions described above are contemplated. Some may apply one or more optimizations to selectively save and restore only a subset of all of the processor state. For example, one such optimization may selectively save and restore values that have been modified or changed but not values that have their initial or default values. Another such optimization may selectively save processor state to memory when the processor state has been modified since it was most recently restored but not when the processor state has not been modified since it was most recently restored. Another such optimization may use a variable size and layout for the processor state save region instead of a fixed size and fixed layout processor state save region to help eliminate holes or gaps between processor state in the processor state save region.

Examples of specific instructions executable on certain processors from Intel that may be modified to have the behavior described above for the control value with respect to the wider and narrower vector registers (e.g., the vector registers 524) are XSAVE (save processor extended states to memory), XSAVEC (save processor extended states with compaction to memory), XSAVEOPT (save processor extended states to memory, optimized), XSAVES (save processor extended states and supervisor states to memory, optimized), XRSTOR (restore processor extended states from memory), and XRSTORS (restore processor extended states and supervisor states from memory). The specific set of processor state components on which these instructions operate may be determined based at least in part on the values of the control register XCRO, the configuration register IA32_XSS MSR, and the general-purpose registers EDX:EAX.

The XSAVE instruction takes a single memory operand, which is an XSAVE area. In addition, the register pair EDX:EAX is an implicit operand used as a state-component bitmap called the instruction mask. The logical-AND of XCRO and the instruction mask is the requested-feature bitmap (RFBM) of the user state components to be saved. Execution of XSAVE saves into the XSAVE area those state components corresponding to bits that are set in RFBM.

The operation of XSAVEOPT is similar to that of XSAVE except that it uses two optimizations to reduce the amount of data stored to memory. This instruction avoids writing data for any state component known to be in its initial or default configuration (the init optimization). That is, in-use data that has been modified or changed may be selectively stored to memory. In addition, if XSAVEOPT is using the same XSAVE area as that used by the most recent execution of XRSTOR, it may avoid writing data for any state component whose configuration is known not to have been modified since then (the modified optimization). XSAVE does not use the init or modified optimizations.

For XSAVE and XSAVEOPT, the processor state save region may have a size and architecturally defined layout that is predefined or defined in advance such that processor state for a particular processor feature is to be stored at the same predefined or fixed offset within the region each time according to a layout map. This represents an un-compacted format of the processor state save region. One possible drawback with such an un-compacted format is that gaps or holes may be left in the processor state save region for a processor that does not implement certain features and/or when supervisor software does not enable certain features.

The operation of XSAVEC is similar to that of XSAVE. One difference is that XSAVEC uses the init optimization. XSAVEC does not use the modified optimization. Another difference is that XSAVEC uses the compacted format for the extended region of the processor state save region. The save area layout may be customized to store the processor state for particular processor features without leaving gaps or holes in the layout. An XSAVEC instruction may have as a parameter a compaction mask to specify which features of processor state are to be saved. For example, the compaction mask may be a bit vector determined by the concatenated contents of one or more processor registers (e.g., the general-purpose registers EDX, ECX, EBX, and/or EAX registers), where each bit of the bit vector may correspond to a particular processor feature and a bit value of '1' may indicate that processor state corresponding to the feature is to be saved and a bit value of '0' may indicate that processor state corresponding to the feature is not to be saved. The instruction may save a compaction mask and the processor state of a subset of processor features supported by the processor in a compacted format in a a processor state save region having a variable size according to the compaction mask to provide for a plurality of variable offsets per feature and set a compacted-save bit in the second save area.

The XRSTOR instruction may use the register pair EDX:EAX is an implicit operand used as a state-component bitmap called the instruction mask. The logical-AND of XCRO and the instruction mask is the requested-feature bitmap (RFBM) of the processor state components to be restored. The XRSTOR instruction may restore from either the un-compacted or the compacted processor state save region.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

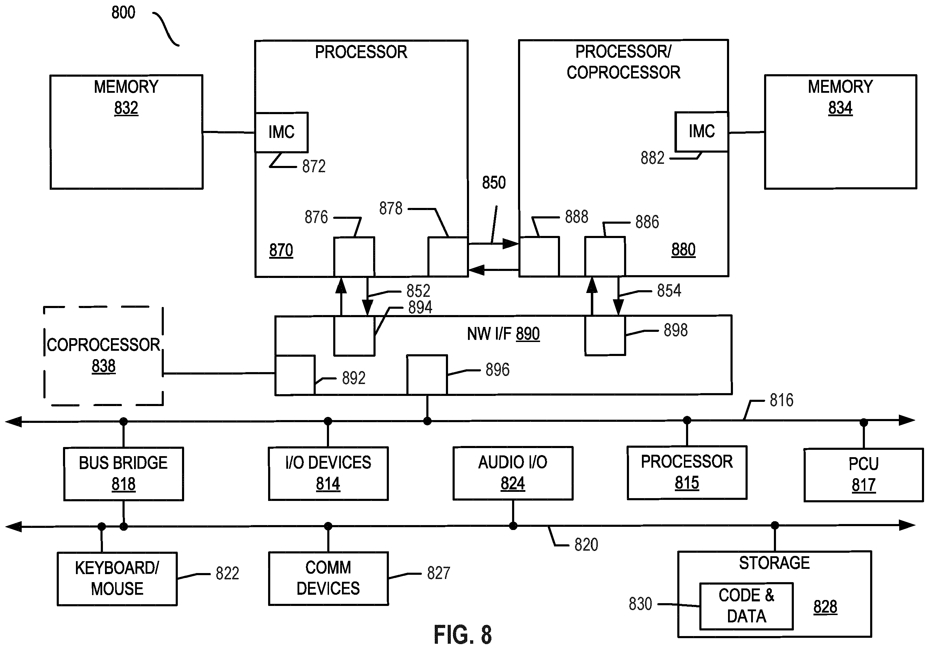

**FIG. 8** illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement the storage "ISAB03 in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

**FIG. 9** illustrates a block diagram of an example processor and/or SoC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 of **FIG. 8****.**

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

### Example Core Architectures - In-order and out-of-order core block diagram.

**FIG. 10(A)** is a block diagram illustrating both an example in-order pipeline and an example register renaming, out-of-order issue/execution pipeline according to examples. **FIG. 10(B)** is a block diagram illustrating both an example in-order architecture core and an example register renaming, out-of-order issue/execution architecture core to be included in a processor according to examples. The solid lined boxes in **FIGS. 10(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 10(A)****,** a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 10(B)** may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

**FIG. 10(B)** shows a processor core 1090 including front-end unit circuitry 1030 coupled to execution engine unit circuitry 1050, and both are coupled to memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front-end unit circuitry 1030 may include branch prediction circuitry 1032 coupled to instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1040 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front-end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, address generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to data cache circuitry 1074 coupled to level 2 (L2) cache circuitry 1076. In one example, the memory access circuitry 1064 may include load unit circuitry, store address unit circuitry, and store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Example Execution Unit(s) Circuitry.

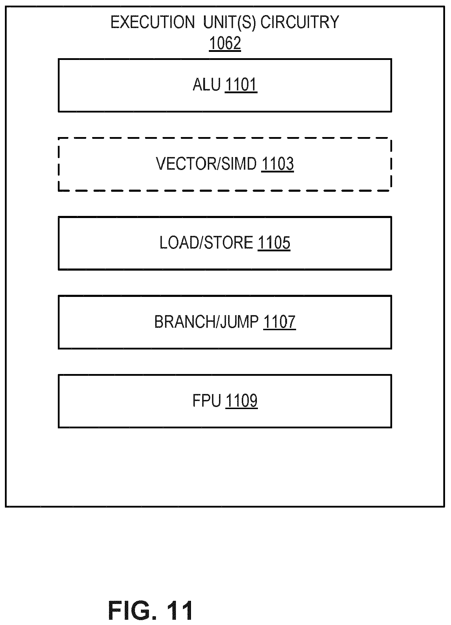

**FIG. 11** illustrates examples of execution unit(s) circuitry, such as execution unit(s) circuitry 1062 of **FIG. 10**(**B**). As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SIMD circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

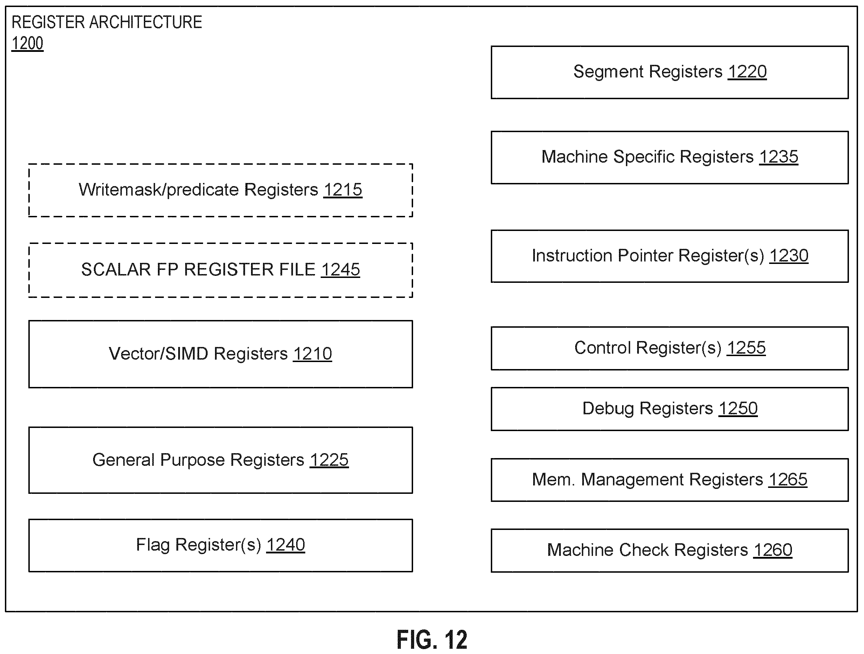

**FIG. 12** is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register file 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory (mem) management registers 1265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1200 may, for example, be used in register file / memory 'ISAB08, or physical register file(s) circuitry 10 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source 1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

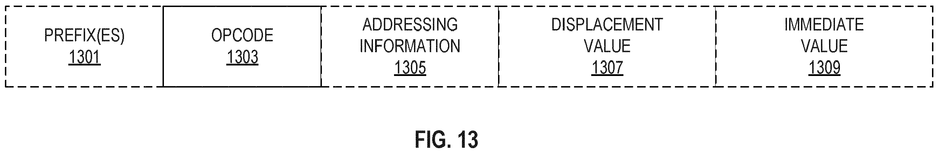

**FIG. 13** illustrates examples of an instruction format. As illustrated, an instruction may include multiple components including, but not limited to, one or more fields for: one or more prefixes 1301, an opcode 1303, addressing information 1305 (e.g., register identifiers, memory addressing information, etc.), a displacement value 1307, and/or an immediate value 1309. Note that some instructions utilize some or all the fields of the format whereas others may only use the field for the opcode 1303. In some examples, the order illustrated is the order in which these fields are to be encoded, however, it should be appreciated that in other examples these fields may be encoded in a different order, combined, etc.

The prefix(es) field(s) 1301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1303 is used to at least partially define the operation to be performed upon a decoding of the instruction. In some examples, a primary opcode encoded in the opcode field 1303 is one, two, or three bytes in length. In other examples, a primary opcode can be a different length. An additional 3-bit opcode field is sometimes encoded in another field.

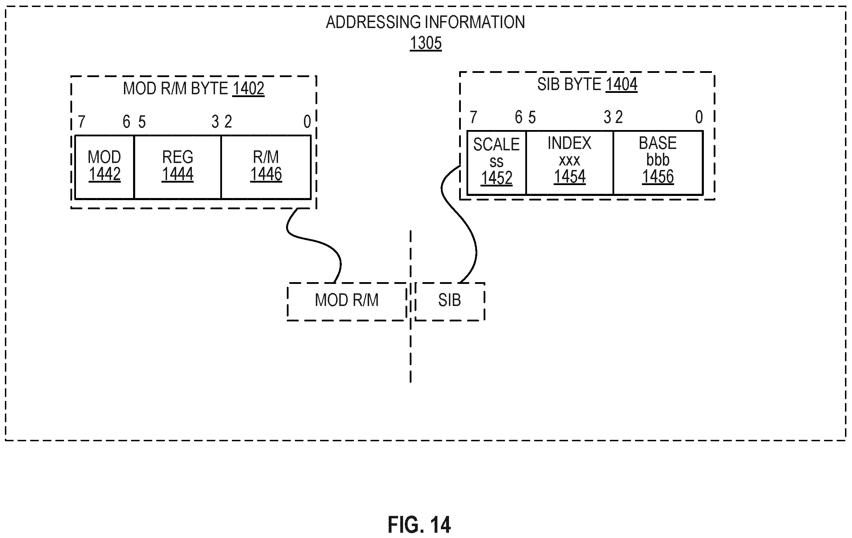

The addressing information field 1305 is used to address one or more operands of the instruction, such as a location in memory or one or more registers. **FIG. 14** illustrates examples of the addressing information field 1305. In this illustration, an optional MOD R/M byte 1402 and an optional Scale, Index, Base (SIB) byte 1404 are shown. The MOD R/M byte 1402 and the SIB byte 1404 are used to encode up to two operands of an instruction, each of which is a direct register or effective memory address. Note that both of these fields are optional in that not all instructions include one or more of these fields. The MOD R/M byte 1402 includes a MOD field 1442, a register (reg) field 1444, and R/M field 1446.

The content of the MOD field 1442 distinguishes between memory access and non-memory access modes. In some examples, when the MOD field 1442 has a binary value of 11 (11b), a register-direct addressing mode is utilized, and otherwise a register-indirect addressing mode is used.

The register field 1444 may encode either the destination register operand or a source register operand or may encode an opcode extension and not be used to encode any instruction operand. The content of register field 1444, directly or through address generation, specifies the locations of a source or destination operand (either in a register or in memory). In some examples, the register field 1444 is supplemented with an additional bit from a prefix (e.g., prefix 1301) to allow for greater addressing.

The R/M field 1446 may be used to encode an instruction operand that references a memory address or may be used to encode either the destination register operand or a source register operand. Note the R/M field 1446 may be combined with the MOD field 1442 to dictate an addressing mode in some examples.

The SIB byte 1404 includes a scale field 1452, an index field 1454, and a base field 1456 to be used in the generation of an address. The scale field 1452 indicates a scaling factor. The index field 1454 specifies an index register to use. In some examples, the index field 1454 is supplemented with an additional bit from a prefix (e.g., prefix 1301) to allow for greater addressing. The base field 1456 specifies a base register to use. In some examples, the base field 1456 is supplemented with an additional bit from a prefix (e.g., prefix 1301) to allow for greater addressing. In practice, the content of the scale field 1452 allows for the scaling of the content of the index field 1454 for memory address generation (e.g., for address generation that uses 2^{scale ∗} index + base).

Some addressing forms utilize a displacement value to generate a memory address. For example, a memory address may be generated according to 2^{scale ∗} index + base + displacement, index* scale + displacement, r/m + displacement, instruction pointer (RIP/EIP) + displacement, register + displacement, etc. The displacement may be a 1-byte, 2-byte, 4-byte, etc. value. In some examples, the displacement field 1307 provides this value. Additionally, in some examples, a displacement factor usage is encoded in the MOD field of the addressing information field 1305 that indicates a compressed displacement scheme for which a displacement value is calculated and stored in the displacement field 1307.

In some examples, the immediate value field 1309 specifies an immediate value for the instruction. An immediate value may be encoded as a 1-byte value, a 2-byte value, a 4-byte value, etc.

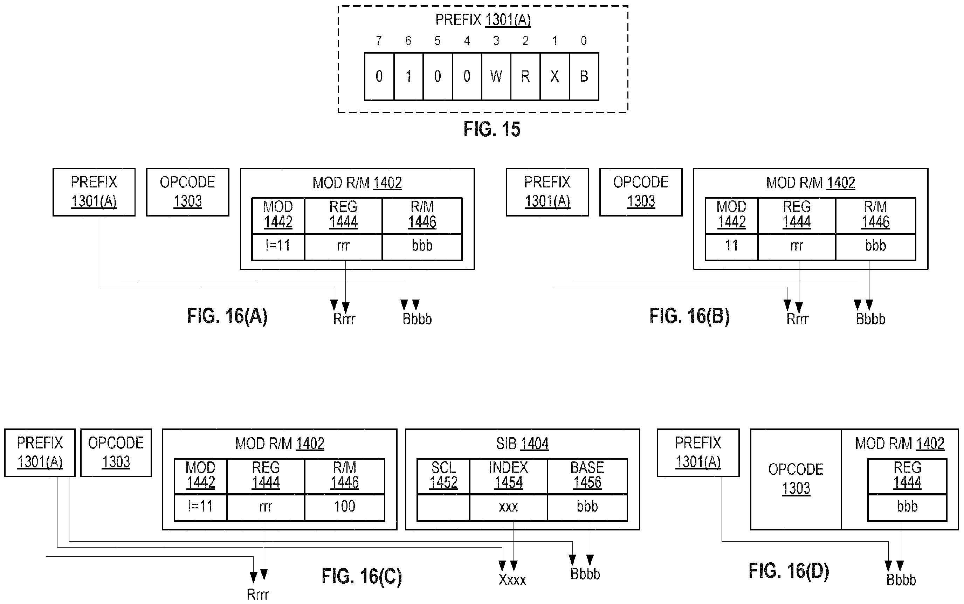

**FIG. 15** illustrates examples of a first prefix 1301(A). In some examples, the first prefix 1301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1301(A) may specify up to three registers using 3-bit fields depending on the format: 1) using the reg field 1444 and the R/M field 1446 of the MOD R/M byte 1402; 2) using the MOD R/M byte 1402 with the SIB byte 1404 including using the reg field 1444 and the base field 1456 and index field 1454; or 3) using the register field of an opcode.

In the first prefix 1301(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1444 and MOD R/M R/M field 1446 alone can each only address 8 registers.

In the first prefix 1301(A), bit position 2 (R) may be an extension of the MOD R/M reg field 1444 and may be used to modify the MOD R/M reg field 1444 when that field encodes a general-purpose register, a 64-bit packed data register (e.g., a SSE register), or a control or debug register. R is ignored when MOD R/M byte 1402 specifies other registers or defines an extended opcode.

### Bit position 1 (X) may modify the SIB byte index field 1454.

Bit position 0 (B) may modify the base in the MOD R/M R/M field 1446 or the SIB byte base field 1456; or it may modify the opcode register field used for accessing general purpose registers (e.g., general purpose registers 1225).

**FIGS. 16**(**A**)**-**(**D**) illustrate examples of how the R, X, and B fields of the first prefix 1301(A) are used. **FIG. 16**(**A**) illustrates R and B from the first prefix 1301(A) being used to extend the reg field 1444 and R/M field 1446 of the MOD R/M byte 1402 when the SIB byte 14 04 is not used for memory addressing. **FIG. 16(B)** illustrates R and B from the first prefix 1301(A) being used to extend the reg field 1444 and R/M field 1446 of the MOD R/M byte 1402 when the SIB byte 1404 is not used (register-register addressing). **FIG. 16(C)** illustrates R, X, and B from the first prefix 1301(A) being used to extend the reg field 1444 of the MOD R/M byte 1402 and the index field 1454 and base field 1456 when the SIB byte 14 04 being used for memory addressing. **FIG. 16(D)** illustrates B from the first prefix 1301(A) being used to extend the reg field 1444 of the MOD R/M byte 1402 when a register is encoded in the opcode 1303.

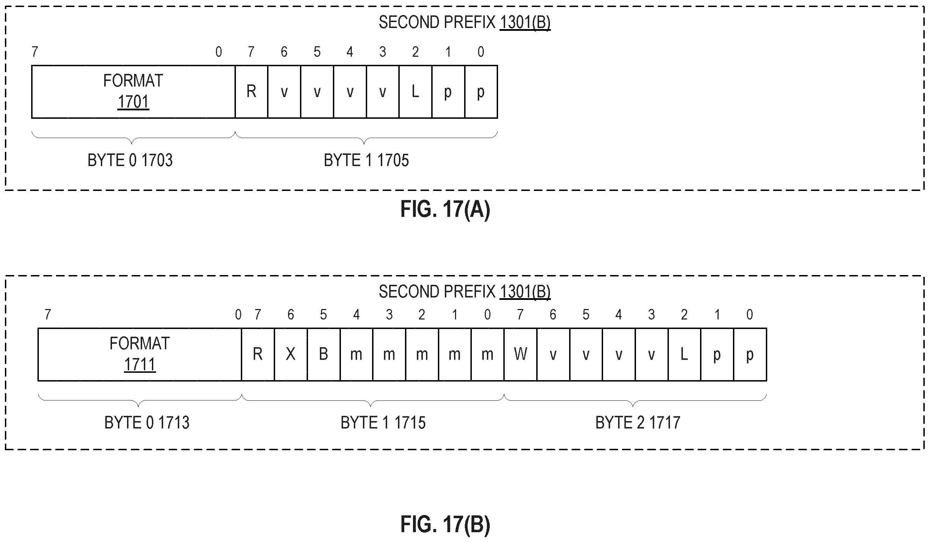

**FIGS. 17(A)****-(B)** illustrate examples of a second prefix 1301(B). In some examples, the second prefix 1301(B) is an example of a VEX prefix. The second prefix 1301(B) encoding allows instructions to have more than two operands, and allows SIMD vector registers (e.g., vector/SIMD registers 1210) to be longer than 64-bits (e.g., 128-bit and 256-bit). The use of the second prefix 1301(B) provides for three-operand (or more) syntax. For example, previous two-operand instructions performed operations such as A = A + B, which overwrites a source operand. The use of the second prefix 1301(B) enables operands to perform nondestructive operations such as A = B + C.

In some examples, the second prefix 1301(B) comes in two forms - a two-byte form and a three-byte form. The two-byte second prefix 1301(B) is used mainly for 128-bit, scalar, and some 256-bit instructions; while the three-byte second prefix 1301(B) provides a compact replacement of the first prefix 1301(A) and 3-byte opcode instructions.

**FIG. 17(A)** illustrates examples of a two-byte form of the second prefix 1301(B). In one example, a format field 1701 (byte 0 1703) contains the value C5H. In one example, byte 1 1705 includes an "R" value in bit[7]. This value is the complement of the "R" value of the first prefix 1301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that support four operands, vvvv, the MOD R/M R/M field 1446 and the MOD R/M reg field 1444 encode three of the four operands. Bits[7:4] of the immediate value field 1309 are then used to encode the third source register operand.

**FIG. 17(B)** illustrates examples of a three-byte form of the second prefix 1301(B). In one example, a format field 1711 (byte 0 1713) contains the value C4H. Byte 1 1715 includes in bits[7:5] "R," "X," and "B" which are the complements of the same values of the first prefix 1301(A). Bits[4:0] of byte 1 1715 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 1717 is used similar to W of the first prefix 1301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that support four operands, vvvv, the MOD R/M R/M field 1446, and the MOD R/M reg field 1444 encode three of the four operands. Bits[7:4] of the immediate value field 1309 are then used to encode the third source register operand.

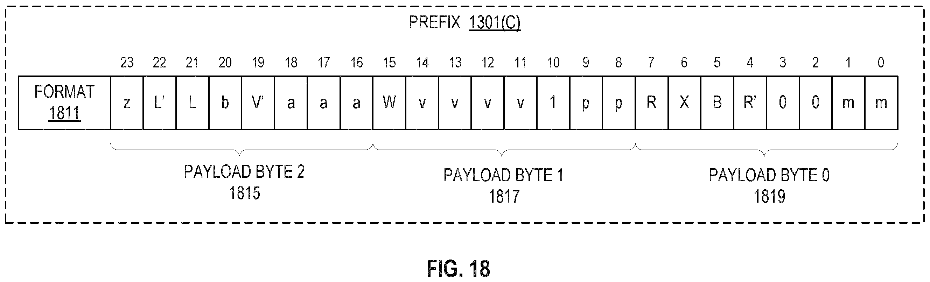

**FIG. 18** illustrates examples of a third prefix 1301(C). In some examples, the third prefix 1301(C) is an example of an EVEX prefix. The third prefix 1301(C) is a four-byte prefix.

The third prefix 1301(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 12**) or predication utilize this prefix. Opmask register allow for conditional processing or selection control. Opmask instructions, whose source/destination operands are opmask registers and treat the content of an opmask register as a single value, are encoded using the second prefix 1301(B).

The third prefix 1301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1301(C) is a format field 1811 that has a value, in one example, of 62H. Subsequent bytes are referred to as payload bytes 1815-1819 and collectively form a 24-bit value of P[23:0] providing specific capability in the form of one or more fields (detailed herein).

In some examples, P[1:0] of payload byte 1819 are identical to the low two mm bits. P[3:2] are reserved in some examples. Bit P[4] (R') allows access to the high 16 vector register set when combined with P[7] and the MOD R/M reg field 1444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1444 and MOD R/M R/M field 1446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1301(A) and second prefix 1311(B) and may serve as an opcode extension bit or operand size promotion.

P[18:16] specify the index of a register in the opmask (writemask) registers (e.g., writemask/predicate registers 1215). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB .index | GPR | Memory addressing |
| VIDX | V' | X | SIB .index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB .index | GPR | Memory addressing |
| VIDX | SIB .index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

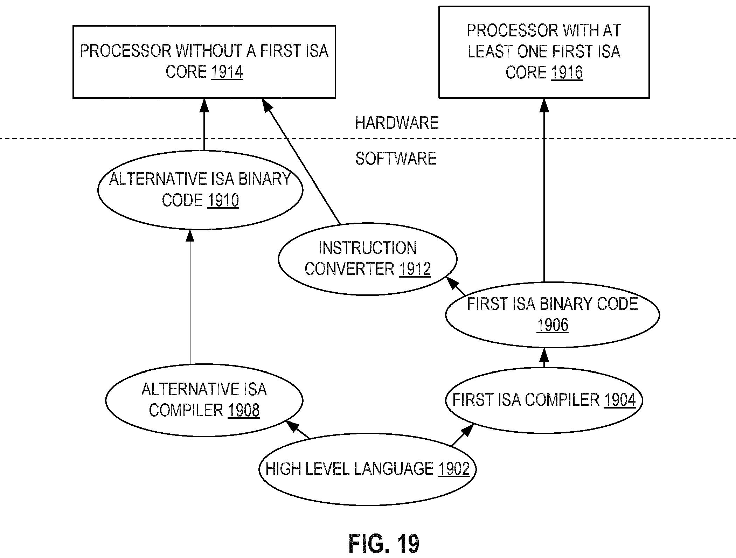

**FIG. 19** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 19** shows a program in a high-level language 1902 may be compiled using a first ISA compiler 1904 to generate first ISA binary code 1906 that may be natively executed by a processor with at least one first ISA core 1916. The processor with at least one first ISA core 1916 represents any processor that can perform substantially the same functions as an Intel@ processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1904 represents a compiler that is operable to generate first ISA binary code 1906 (e.g., object code) that can, with or without additional linkage processing, be executed on the processor with at least one first ISA core 1916. Similarly, **FIG. 19** shows the program in the high-level language 1902 may be compiled using an alternative ISA compiler 1908 to generate alternative ISA binary code 1910 that may be natively executed by a processor without a first ISA core 1914. The instruction converter 1912 is used to convert the first ISA binary code 1906 into code that may be natively executed by the processor without a first ISA core 1914. This converted code is not necessarily to be the same as the alternative ISA binary code 1910; however, the converted code will accomplish the general operation and be made up of instructions from the alternative ISA. Thus, the instruction converter 1912 represents software, firmware, hardware, or a combination thereof that, through emulation, simulation or any other process, allows a processor or other electronic device that does not have a first ISA processor or core to execute the first ISA binary code 1906.

Components, features, and details described for any of **FIGS. 3-7** may also optionally apply to any of **FIGS. 1-2****.** Components, features, and details described for any of the processors disclosed herein (e.g., 100, 500, 700) may optionally apply to any of the methods disclosed herein (e.g., 236), which in embodiments may optionally be performed by and/or with such processors. Any of the processors described herein (e.g., 100, 500, 700) in embodiments may optionally be included in any of the systems disclosed herein (e.g., of **Fig. 8**). Any of the processors disclosed herein (e.g., 100, 500, 700) may optionally have any of the microarchitectures shown herein (e.g., of **Fig. 10B**). In addition, the instructions disclosed herein may in some embodiments optionally have the EVEX related instruction formats/schemes described herein (e.g., as described for **Fig. 18**).

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have be used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth in order to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail in order to avoid obscuring the understanding of the description.

### EXAMPLE EMBODIMENTS

The following examples pertain to further embodiments. Specifics in the examples may be used anywhere in one or more embodiments.

Example 1 is method performed by a processor. The method includes executing first instances of vector instructions having respective opcode values regardless of whether they specify wider vectors of a wider vector width or narrower vectors of a narrower vector width, when a control value is a first value. The wider vector width is wider than the narrower vector width. The method also includes executing second instances of vector instructions having the respective opcode values when they specify narrower vectors of the narrower vector width, but do not specify wider vectors of the wider vector width, when the control value is a second value different than the first value. The method also includes preventing execution of third instances of vector instructions having the respective opcode values when they specify wider vectors of the wider vector width, when the control value is the second value.

Example 2 includes the method of Example 1, wherein said preventing comprises causing exceptions for the third instances of the vector instructions.

Example 3 includes the method of any one of Examples 1 or 2, further including optionally accessing the control value from a register or other on-die storage location that is on a die on which the processor is disposed.

Example 4 includes the method of any one of Examples 1 or 2, further including optionally accessing the control value from a field of a VMCS, VMCB, or other architecturally-defined virtualization control structure in system memory.

Example 5. The method any one of Examples 1 to 4, wherein the wider vector width is at least 512-bits, and wherein the narrower vector width is no more than 256-bits.

Example 6 includes the method of any one of Examples 1 to 5, further including optionally decoding a processor state save instruction, and optionally performing operations corresponding to the processor state save instruction. The operations include, when the control value is the first value, saving processor state of a set of wider vector registers of the wider vector width to a processor state save area in system memory. When the control value is the second value, saving processor state of a set of narrower vector registers of the narrower vector width to the processor state save area, without saving the processor state of the set of wider vector registers to the processor state save area.

Example 7 includes the method of any one of Examples 1 to 6, further including optionally decoding a processor state restore instruction, and optionally performing operations corresponding to the processor state restore instruction. The operations include, when the control value is the first value, loading processor state from a processor state save area in system memory into a set of wider vector registers of the wider vector width. When the control value is the second value, loading processor state from the processor state save area into a set of narrower vector registers of the narrower vector width, without loading processor state from the processor state save area into the set of wider vector registers.

Example 8 is a processor including front-end circuitry to decode vector instructions having respective opcode values into corresponding first decoded instructions regardless of whether they specify wider vectors of a wider vector width or narrower vectors of a narrower vector width, when a control value is a first value. The wider vectors being wider than the narrower vectors. The front-end circuitry is also to decode the vector instructions having the respective opcode values into corresponding second decoded instructions when they specify narrower vectors of the narrower vector width, but do not specify wider vectors of the wider vector width, when the control value is a second value different than the first value. The front-end circuitry is also to cause exceptions for the vector instructions having the respective opcode values when they specify wider vectors of the wider vector width, when the control value is the second value. The processor also includes execution circuitry coupled with the front-end circuitry, the execution circuitry to execute the first and second decoded instructions.

Example 9 includes the processor of Example 8, further including a die on which the processor is disposed, and optionally a register or other on-die storage location of the die, the on-die storage location to store the control value.

Example 10 includes the processor of Example 8, where the processor is optionally to access the control value from a VMCS, VMCB, or other architecturally-defined field of a virtualization control structure in system memory.

Example 11 includes the processor of any one of Examples 8 to 10, wherein the wider vector width is at least 512-bits, and wherein the narrower vector width is no more than 256-bits.

Example 12 includes the processor of any one of Examples 8 to 10, wherein the wider vector width is 512-bits, and wherein the narrower vector width is either 256-bits or 128-bits.

Example 13 includes the processor of any one of Examples 8 to 12, where the front-end circuitry is optionally to decode a processor state save instruction, and optionally further including execution circuitry to perform operations corresponding to the processor state save instruction. The operations include, when the control value is the first value, save processor state of a set of wider vector registers of the wider vector width to a processor state save area in system memory. The operations include, when the control value is the second value, save processor state of a set of narrower vector registers of the narrower vector width to the processor state save area, without saving the processor state of the set of wider vector registers to the processor state save area.

Example 14 includes the processor of any one of Examples 8 to 13, where the front-end circuitry is to optionally decode a processor state restore instruction, and optionally further including execution circuitry to perform operations corresponding to the processor state restore instruction. The operations include, when the control value is the first value, load processor state from a processor state save area in system memory into a set of wider vector registers of the wider vector width. The operations include, when the control value is the second value, load processor state from the processor state save area into a set of narrower vector registers of the narrower vector width, but not load processor state from the processor state save area into the set of wider vector registers.

Example 15 includes the processor of any one of Examples 8 to 14, where the front-end circuitry is to optionally decode the vector instructions having the respective opcode values into corresponding decoded instructions regardless of whether they specify wider vectors of the wider vector width, narrower vectors of the narrower vector width, or even narrower vectors of an even narrower vector width, when the control value is the first value, the even narrower vector width being narrower than the narrower vector width. The front-end circuitry is also to decode the vector instructions having the respective opcode values into corresponding decoded instructions when they specify even narrower vectors of the even narrower vector width, but do not specify wider vectors of the wider vector width or narrower vectors the narrower vector width, when the control value is a third value different than the first and second values.

Example 16 is a processor including an extended control register XCR0 including: (1) a bit position XCR0[5] to store a first bit, the first bit to either be set to enable, or cleared to disable, use of a set of eight 64-bit mask registers k0-k7; (2) a bit position XCR0[6] to store a second bit, the second bit to either be set to enable, or cleared to disable, use of a most significant 256-bits of a first set of sixteen 512-bit vector registers ZMM0-ZMM15; and (2) a bit position XCR0[7] to store a third bit, the third bit to either be set to enable, or cleared to disable, use of a second set of sixteen 512-bit vector registers ZMM16-ZMM31, where the first set of sixteen 512-bit vector registers ZMM0-ZMM15 and the second set of sixteen 512-bit vector registers ZMM 16-ZMM31 are to store 512-bit vectors. The processor also includes front-end circuitry, when the first, second, and third bits are set, and when a control value is a first value, decode vector instructions having respective opcode values into corresponding first decoded instructions regardless of whether they specify 512-bit vectors of a 512-bit vector width, 256-bit vectors of a 256-bit vector width, or 128-bit vectors of a 128-bit vector width. The front-end circuitry, when the first, second, and third bits are set, and when the control value is a second value different than the first value, is also to decode the vector instructions having the respective opcode values into corresponding second decoded instructions when they specify 256-bit vectors of the 256-bit vector width or 128-bit vectors of the 128-bit vector width but not 512-bit vectors of the 512-bit vector width. The front-end circuitry is to cause exceptions for the vector instructions having the respective opcode values when they specify 512-bit vectors of the 512-bit vector width. The processor also includes execution circuitry, coupled with the front-end circuitry, the execution circuitry to execute the first and second decoded instructions.

Example 17 includes the processor of Example 16, where the processor is to access the control value from a virtual machine control structure (VMCS) or VMCB or other virtualization control structure that is to be stored in system memory.

Example 18 includes the processor of any one of Examples 16 to 17, where the front-end circuitry is to decode a processor state save instruction, and further including execution circuitry to perform operations corresponding to the processor state save instruction. The operations include, when the control value is the first value, save processor state of the first set of sixteen 512-bit vector registers ZMM0-ZMM15 and the second set of sixteen 512-bit vector registers ZMM16-ZMM31, which together are to store the 512-bit vectors, to a processor state save area in system memory. The operations include, when the control value is the second value, save processor state of thirty-two 256-bit vector registers YMM0-YMM31 that are to store the 256-bit vectors to the processor state save area, without saving the processor state of the most significant 256-bits of the first set of sixteen 512-bit vector registers ZMM0-ZMM15, or a most significant 256-bits of the second set of sixteen 512-bit vector registers ZMM16-ZMM31, to the processor state save area.

Example 19 is a system including: a dynamic random access memory (DRAM) to store a virtual machine control structure (VMCS), the VMCS having a field to store a control value, and a processor coupled with the DRAM. The processor including front-end circuitry to decode vector instructions having respective opcode values into corresponding first decoded instructions regardless of whether they specify wider vectors of a wider vector width or narrower vectors of a narrower vector width, when a control value is a first value. The wider vectors being wider than the narrower vectors. The front-end circuitry is also to decode the vector instructions having the respective opcode values into corresponding second decoded instructions when they specify narrower vectors of the narrower vector width, but do not specify wider vectors of the wider vector width, when the control value is a second value different than the first value. The front-end circuitry is also to cause exceptions for the vector instructions having the respective opcode values when they specify wider vectors of the wider vector width, when the control value is the second value. The processor also includes execution circuitry coupled with the front-end circuitry, the execution circuitry to execute the first and second decoded instructions.

Example 20 includes the system of Example 19, wherein the wider vector width is at least 512-bits, and wherein the narrower vector width is no more than 256-bits.

Example 21 includes the system of any one of Examples 19 to 20, where the front-end circuitry is to decode a processor state save instruction, and further including execution circuitry to perform operations corresponding to the processor state save instruction. The operations include, when the control value is the first value, save processor state of a set of wider vector registers of the wider vector width to a processor state save area in system memory. The operations include, when the control value is the second value, save processor state of a set of narrower vector registers of the narrower vector width to the processor state save area, without saving the processor state of the set of wider vector registers to the processor state save area.

Example 22 is a processor or other apparatus operative to perform the method of any one of Examples 1 to 7.

Example 23 is a processor or other apparatus that includes means for performing the method of any one of Examples 1 to 7.

Example 24 is a processor or other apparatus that includes any combination of modules and/or units and/or logic and/or circuitry and/or means operative to perform the method of any one of Examples 1 to 7.

Example 25 is an optionally non-transitory and/or tangible machine-readable medium, which optionally stores or otherwise provides instructions that if and/or when executed by a processor, computer system, electronic device, or other machine, are operative to cause the machine to perform the method of any one of Examples 1 to 7.

## Claims

1. A method performed by a processor, the method comprising:
executing first instances of vector instructions having respective opcode values regardless of whether they specify wider vectors of a wider vector width or narrower vectors of a narrower vector width, when a control value is a first value, the wider vector width being wider than the narrower vector width;
executing second instances of vector instructions having the respective opcode values when they specify narrower vectors of the narrower vector width, but do not specify wider vectors of the wider vector width, when the control value is a second value different than the first value; and
preventing execution of third instances of vector instructions having the respective opcode values when they specify wider vectors of the wider vector width, when the control value is the second value.

2. The method of claim 1, wherein said preventing comprises causing exceptions for the third instances of the vector instructions.

3. The method of any one of claims 1 to 2, further comprising accessing the control value from an on-die storage location that is on a die on which the processor is disposed.

4. The method of any one of claims 1 to 2, further comprising accessing the control value from a field of an architecturally-defined virtualization control structure in system memory.

5. The method of any one of claims 1 to 4, wherein the wider vector width is at least 512-bits, and wherein the narrower vector width is no more than 256-bits.

6. The method of any one of claims 1 to 5, further comprising:
decoding a processor state save instruction; and
performing operations corresponding to the processor state save instruction, including:
when the control value is the first value, saving processor state of a set of wider vector registers of the wider vector width to a processor state save area in system memory; and
when the control value is the second value, saving processor state of a set of narrower vector registers of the narrower vector width to the processor state save area, without saving the processor state of the set of wider vector registers to the processor state save area.

7. A processor comprising:
front-end circuitry to:
decode vector instructions having respective opcode values into corresponding first decoded instructions regardless of whether they specify wider vectors of a wider vector width or narrower vectors of a narrower vector width, when a control value is a first value, the wider vector width being wider than the narrower vector width;
decode the vector instructions having the respective opcode values into corresponding second decoded instructions when they specify narrower vectors of the narrower vector width, but do not specify wider vectors of the wider vector width, when the control value is a second value different than the first value; and
cause exceptions for the vector instructions having the respective opcode values when they specify wider vectors of the wider vector width, when the control value is the second value; and
execution circuitry coupled with the front-end circuitry, the execution circuitry to execute the first and second decoded instructions.

8. The processor of claim 7, further comprising:
a die on which the processor is disposed; and
an on-die storage location of the die, the on-die storage location to store the control value.

9. The processor of claim 7, wherein the processor is to access the control value from an architecturally-defined field of a virtualization control structure in system memory.

10. The processor of any one of claims 7 to 9, wherein the wider vector width is at least 512-bits, and wherein the narrower vector width is no more than 256-bits.

11. The processor of claim 10, wherein the wider vector width is 512-bits, and wherein the narrower vector width is either 256-bits or 128-bits.

12. The processor of any one of claims 7 to 11, wherein the front-end circuitry is to decode a processor state save instruction, and further comprising:
execution circuitry to perform operations corresponding to the processor state save instruction, including to:
when the control value is the first value, save processor state of a set of wider vector registers of the wider vector width to a processor state save area in system memory; and
when the control value is the second value, save processor state of a set of narrower vector registers of the narrower vector width to the processor state save area, without saving the processor state of the set of wider vector registers to the processor state save area.

13. The processor of any one of claims 7 to 12, wherein the front-end circuitry is to decode a processor state restore instruction, and further comprising:
execution circuitry to perform operations corresponding to the processor state restore instruction, including to:
when the control value is the first value, load processor state from a processor state save area in system memory into a set of wider vector registers of the wider vector width; and
when the control value is the second value, load processor state from the processor state save area into a set of narrower vector registers of the narrower vector width, but not load processor state from the processor state save area into the set of wider vector registers.

14. Machine-readable storage including machine-readable instructions that when executed by a machine cause the machine to perform a method as claimed in any preceding claim.

15. A computer program comprising instructions that when executed by a computer cause the computer to perform a method as claimed in any preceding claim.
